# EUROPEAN PATENT SPECIFICATION

(11) **EP 3 594 264 B1**
(45) Date of publication and mention of the grant of the patent: **18.11.2020**
(21) Application number: 19185486.8
(22) Date of filing: 10.07.2019
(51) Int. Cl.: C08G 77/16, C08G 77/20, C08L 83/06, C09D 183/06

(54) **OXYGEN-CURABLE SILICONE COMPOSITION AND CURED PRODUCT OF SAME**
SAUERSTOFFHÄRTBARE SILIKONZUSAMMENSETZUNG UND GEHÄRTETES PRODUKT DARAUS
COMPOSITION DE SILICONE DURCISSABLE À L'OXYGÈNE ET PRODUIT DURCI DE CELLE-CI

(30) Priority: 13.07.2018 JP 2018133318
(43) Date of publication of application: 15.01.2020
(73) Proprietor: Shin-Etsu Chemical Co., Ltd., Tokyo (JP)
(72) Inventor: KITAGAWA, Taich, Annaka-shi, Gunma (JP); IKENO, Masayuki, Annaka-shi, Gunma (JP); MATSUMOTO, Nobuaki, Annaka-shi, Gunma (JP)
(74) Representative: Ter Meer Steinmeister & Partner

(56) References cited:
- EP-A1- 2 993 200
- JP-A- 2014 136 706
- US-A1- 2004 242 812

## Description

### TECHNICAL FIELD

The present invention relates to an oxygen-curable silicone composition and a cured product of the same.

### BACKGROUND ART

Silicone rubber excels in heat resistance, cold resistance and electric insulation, and has widely been used for various industries including electric/electronic, automotive, and architectural industries.

Two types of curable compositions, namely those of one-pack type and two-pack type, have been known as compositions capable of giving such silicone rubber (see Patent Documents 1 and 2). Addition-curable compositions, however, require heating for usage, meanwhile UV-curable compositions (see Patent Document 3) require UV irradiation equipment to be introduced, although usable at normal temperature.

Patent document US-A-2004/0242812 describes a curable composition comprising a polymer having a siloxane backbone and reactive moiety capable of polymerisation, an organoborane amine complex, a compound (monomer or polymer) having olefinic unsaturation capable of polymerisation and a catalyst used for polymerisation of the polymer having a siloxane backbone and the a compound having olefinic unsaturation. In particular, this document describes a composition (adhesive) comprising an organopolysiloxane comprising SiOH groups, a methoxy(methacryloxypropyl)organopolysiloxane, silica, a methacrylate monomer and tributylborane (B(TBu)₃) complexed. The composition is cured at room temperature in presence of an amine as catalyst.

Patent document EP-A-2 993 200 describes polymeric foam precursor compositions comprising a di- or tri-functional (meth)acrylate oligomer, a di- or tri-functional thiol compound and a borane compound used as initiator for the polymerisation of the acrylate-containing compound. The borane compound may be of general formula B(R)₂(OR) such as methoxydiethyl borane.

Patent document JP-A-2014136706 describes resin compositions comprising a vinyl-containing monomer compound comprising a carboxyl group, a vinyl monomer free of carboxyl group and a borane compound as polymerisation initiator. In particular, polymerisation of methacrylic acid, methyl methacrylate and styrene is performed in presence of methoxydiethyl borane compound as polymerisation initiator at 80°C.

In recent years, there have been growing demands for energy saving in manufacturing process, as well as for development of materials that excel in both of curability at room temperature and mechanical characteristics.

### Citation List

Patent Document 1: JP 2849027
Patent Document 2: JP-A 2010-163478
Patent Document 3: JP-A H07-216232
Patent Document 4: JP-A 2010-280891

### SUMMARY OF THE INVENTION

In light of the above circumstances, an object of the present invention is to provide an oxygen-curable silicone composition capable of curing at room temperature, whose reaction being triggered by atmospheric oxygen, needing neither heating nor UV irradiation for usage, and a cured product of the same.

As a result of extensive investigations, the inventors have found that a composition, which contains a specific organopolysiloxane having a reactive double bond such as acryloyloxyalkyl group, a specific organoborane complex, and a compound having Si-OH group, can allow a polymerization reaction to proceed while being triggered by atmospheric oxygen, and can provide a cured product at room temperature without heating or UV irradiation for usage.

Note that a composition using an alkylborane-amine complex as a catalyst, having been proposed as a composition polymerizable at room temperature (see Patent Document 4), does not disclose the organoborane complex used in the present invention.

That is, the present invention provides:
1. An oxygen-curable silicone composition that includes:
   (A) 100 parts by weight of an organopolysiloxane having the formula (1) below: 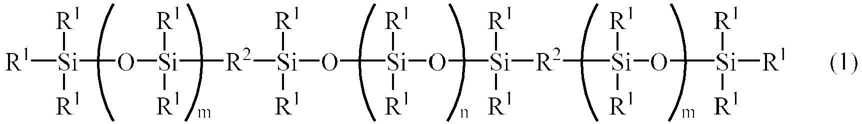 wherein R¹ each independently represents an alkyl group having 1 to 10 carbon atoms, alkenyl group having 2 to 10 carbon atoms, aryl group having 6 to 10 carbon atoms, acryloyloxy group, methacryloyloxy group, acryloyloxyalkyl group, methacryloyloxyalkyl group, acryloyloxyalkyloxy group, or methacryloyloxyalkyloxy group, and has per molecule at least one group selected from acryloyloxy group, methacryloyloxy group, acryloyloxyalkyl group, methacryloyloxyalkyl group, acryloyloxyalkyloxy group, and methacryloyloxyalkyloxy group; R² each independently represents an oxygen atom, alkylene group having 1 to 10 carbon atoms, or arylene group having 6 to 10 carbon atoms; and m and n represent numbers that satisfy 1 ≤ m + n ≤ 1,000;
   (B) 0.01 to 20 parts by weight of an organoborane complex having the formula (2) below: 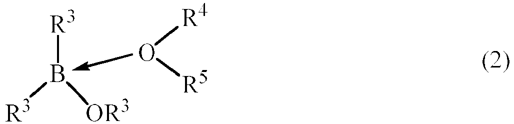 wherein R³ each independently represents a monovalent hydrocarbon group having 1 to 10 carbon atoms, R⁴ and R⁵ each independently represents a hydrocarbon group having 1 to 10 carbon atoms, and, R⁴ and R⁵ may bond to form a divalent linking group; and
   (C) 0.01 to 1,000 parts by weight of a compound having Si-OH group;
2. The oxygen-curable silicone composition of 1, wherein the compound having Si-OH group of component (C) is one or more compounds selected from:
   (C-1) an organosilicon compound having the formula (3) below: 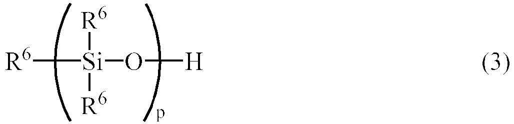 wherein R⁶ each is identical to R¹, and p is a number that satisfies 1 ≤ p ≤ 1,000;
   (C-2) an organosilicon compound having the formula (4) below: 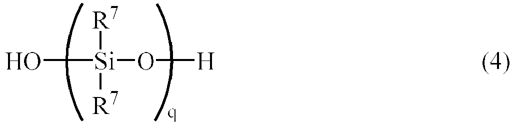 wherein R⁷ each is identical to R¹, and q represents a number that satisfies 1 ≤ q ≤ 1,000;
   (C-3) a silicone resin that contains either SiO_{4/2} unit or R⁸SiO_{3/2} unit (R⁸ is identical to R¹) as a constitutive unit, and has at least one Si-OH group in a molecule; and
   (C-4) a silica having a Si-OH group on a surface;
3. The oxygen-curable silicone composition of 1 or 2, wherein the compound having Si-OH group of component (C) contains, per 100 g, 0.001 mol or more of Si-OH group;
4. The oxygen-curable silicone composition of any one of 1 to 3, further includes:
   (D) 1 to 1,000 parts by weight of at least one compound selected from acrylate compound free of siloxane structure and methacrylate compound free of siloxane structure, per 100 parts by weight of the component (A); and
5. A cured product of the oxygen-curable silicone composition of any one of 1 to 4.

### ADVANTAGEOUS EFFECTS OF THE INVENTION

The oxygen-curable silicone composition of the present invention demonstrates curability at room temperature, requires neither heating process nor UV irradiation process for curing, makes it possible to save time and energy for curing process, and does not need heating equipment and UV irradiation equipment to be introduced.

The oxygen-curable silicone composition having such properties is particularly suitable for applications such as adhesive.

### DESCRIPTION OF THE PREFERRED EMBODIMENT

Hereinafter, the present invention is described in detail.

The oxygen-curable silicone composition of the present invention essentially contains the components (A) to (C) below.

### [1] Component (A)

The component (A) in the oxygen-curable silicone composition of the present invention is an organopolysiloxane having the formula (1) below.

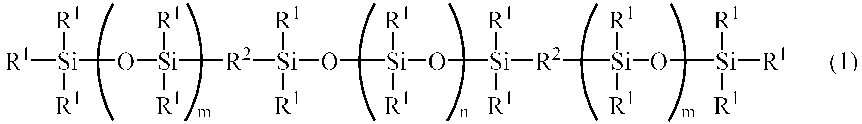

In formula (1), R¹ each independently represents an alkyl group having 1 to 10 carbon atoms, alkenyl group having 2 to 10 carbon atoms, aryl group having 6 to 10 carbon atoms, acryloyloxy group, methacryloyloxy group, acryloyloxyalkyl group, methacryloyloxyalkyl group, acryloyloxyalkyloxy group, or methacryloyloxylalkyloxy group, and has per molecule at least one group selected from acryloyloxy group, methacryloyloxy group, acryloyloxyalkyl group, methacryloyloxyalkyl group, acryloyloxyalkyloxy group, and methacryloyloxyalkyloxy group; R² each independently represents an oxygen atom, alkylene group having 1 to 10 carbon atoms, or arylene group having 6 to 10 carbon atoms; and, m and n represent numbers that satisfy 1 ≤ m + n ≤ 1,000.

The alkyl group having 1 to 10 carbon atoms represented by R¹ may be straight-chain, branched or cyclic one, and examples thereof include methyl, ethyl, n-propyl, n-butyl, n-pentyl, n-hexyl, and n-octyl groups.

The alkenyl group having 2 to 10 carbon atoms may be straight-chain, branched or cyclic one, and examples thereof include vinyl, allyl (2-propenyl), 1-butenyl, and 1-octenyl groups.

Examples of the aryl group having 6 to 10 carbon atoms include phenyl and naphthyl groups.

Also, some or all of hydrogen atoms on these groups may be substituted by halogen atoms (for example, chlorine atom, bromine atom, fluorine atom).

In particular, 90 mol% or more of the total number of R¹ preferably is a methyl group or phenyl group, in consideration of easiness of synthesis and cost.

At least one of R¹ is a polymerizable group selected from acryloyloxy group, methacryloyloxy group, acryloyloxylalkyl group, methacryloyloxyalkyl group, acryloyloxylalkyloxy group, and methacryloyloxyalkyloxy group.

The alkyl (alkylene) group in the acryloyloxyalkyl group, methacryloyloxyalkyl group, acryloyloxyalkyloxy group, and methacryloyloxyalkyloxy group is preferably, but not specifically limited to, alkylene group having 1 to 10 carbon atoms, such as methylene, ethylene, trimethylene, propylene, tetramethylene, pentamethylene, or hexamethylene group, more preferably alkylene group having 1 to 5 carbon atoms, and even more preferably ethylene or trimethylene group.

These polymerizable groups may reside at the terminal or in the middle of a molecular chain of organopolysiloxane, and preferably reside only at the terminal in consideration of flexibility of an obtainable cured product, and more preferably reside on both terminals.

The alkylene group having 1 to 10 carbon atoms represented by R² may be straight-chain, branched or cyclic one, and examples thereof include methylene, ethylene, trimethylene, hexamethylene, cyclohexylene and octamethylene groups.

Examples of the arylene group having 6 to 10 carbon atoms include 1,2-phenylene, 1,3-phenylene, 1,4-phenylene, and naphthylene groups.

In particular, R² preferably is an oxygen atom, ethylene group, trimethylene group or 1,4-phenylene group, and more preferably represents an oxygen atom.

Both of m and n represent numbers of 0 or larger and satisfy 1 ≤ m + n ≤ 1,000, preferably satisfy 1 ≤ m + n ≤ 100, and more preferably 20 ≤ m + n ≤ 100.

If (m + n) is smaller than 1, the organopolysiloxane will be more volatile, meanwhile if (m + n) exceeds 1,000, the composition will be more viscous, and inconvenient to handle.

The organopolysiloxane as the component (A) may be used singly, or two or more may be used in combination.

The organopolysiloxane of the component (A) can be produced by any of known methods, and typically by combining a compound having in the molecule both of polymerizable group and hydrosilyl group, with an organopolysiloxane having a terminal vinyl group, in the presence of a platinum catalyst.

The organopolysiloxane of the component (A) is exemplified by, but not limited to, compounds below. 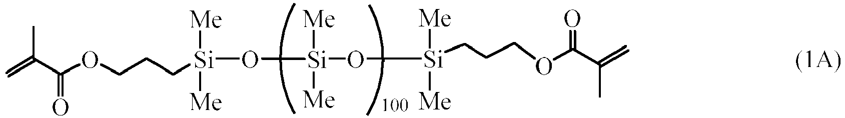 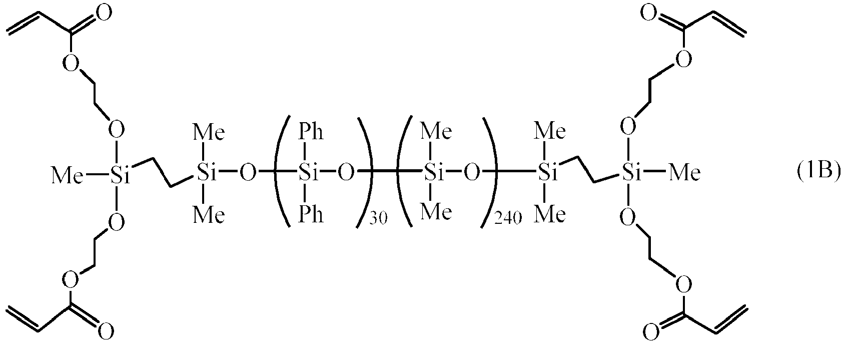 (In formula (1B), order of arrangement of siloxane units in parentheses is freely selectable.)

The organopolysiloxane of the component (A) can be produced by any of known methods. For example, the organopolysiloxane having the formula (1A) is obtainable by reacting a dimethylsiloxane/diphenylsiloxane copolymer with both terminals blocked with dimethylmethacrylsiloxy groups with a cyclic dimethylsiloxane, under acid equilibrium using trifluoromethanesulfonic acid.

Meanwhile, the organopolysiloxane having the formula (1B) is obtainable by reacting a hydrosilylated product formed from a dimethylsiloxane/diphenylsiloxane copolymer with both terminals blocked with dimethylvinylsiloxy groups and chlorodimethylsilane with 2-hydroxyethyl acrylate.

### [2] Component (B)

The component (B) in the oxygen-curable silicone composition of the present invention is an organoborane complex having the formula (2) below, capable of generating an active radical species that acts as a polymerization initiator under the presence of oxygen.

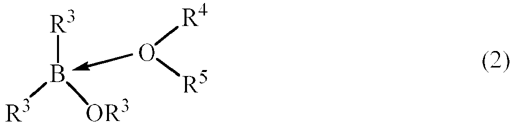

In formula (2), R³ each independently represents a monovalent hydrocarbon group having 1 to 10 carbon atoms, R⁴ and R⁵ each independently represents a hydrocarbon group having 1 to 10 carbon atoms, and, R⁴ and R⁵ may bond to form a divalent linking group.

Examples of the monovalent hydrocarbon group having 1 to 10 carbon atoms represented by R³ include alkyl groups having 1 to 10 carbon atoms, such as methyl, ethyl, n-propyl, n-butyl, n-pentyl, n-hexyl, and n-octyl groups; alkenyl groups having 2 to 10 carbon atoms, such as vinyl, allyl (2-propenyl), 1-butenyl, and 1-octenyl groups; and aryl groups having 6 to 10 carbon atoms, such as phenyl and naphthyl groups.

Some or all of hydrogen atoms on these groups may be substituted by halogen atoms (for example, chlorine atom, bromine atom, fluorine atom).

In particular, R³ preferably is an alkyl group, and more preferably is a methyl group or ethyl group. In a more preferred combination, R³ bonded to the oxygen atom is a methyl group, and R³ bonded to the boron atom is an ethyl group.

The hydrocarbon group having 1 to 10 carbon atoms represented by R⁴ and R⁵ may be not only groups identical to the aforementioned monovalent hydrocarbon groups represented by R³, but also may be divalent linking groups (or, cyclic structures) formed by bonding between R⁴ and R⁵ and examples thereof include straight-chain, branched or cyclic alkylene groups having 1 to 10 carbon atoms such as methylene, ethylene, propylene, trimethylene, pentamethylene, hexamethylene, heptamethylene, octamethylene, nonamethylene, and decamethylene groups; arylene groups having 6 to 10 carbon atoms such as phenylene and naphthylene groups.

In particular, the divalent linking group formed by bonding between R⁴ and R⁵ is preferably an alkylene group, and is more preferably a tetrahydrofuran (THF) ring composed of R⁴ and R⁵ and an oxygen atom.

Examples of the component (B) include methoxydiethylborane (MDEB)-THF complex.

Amount of addition of the component (B) is 0.01 to 20 parts by weight per 100 parts by weight of the component (A), which is more preferably 0.05 to 10 parts by weight, and even more preferably 0.05 to 5 parts by weight. With the content less than 0.01 parts by weight, the curability may decline, meanwhile with the content exceeding 20 parts by weight, the composition may become inconvenient to handle due to accelerated curing, or the obtainable cured product may have degraded characteristics.

### [3] Component (C)

The component (C) in the oxygen-curable silicone composition of the present invention is a compound having Si-OH group.

While content of Si-OH group possessed by the compound is not specifically limited, it is preferably 0.001 mol or more per 100 g of the compound, and is more preferably 0.01 mol or more.

The compound as the component (C) is not specifically limited so long as it can satisfy the aforementioned amount of Si-OH group. In the present invention, one or more compounds (C-1) to (C-4) below are preferably used.

### (C-1) Organosilicon compound having the formula (3) below

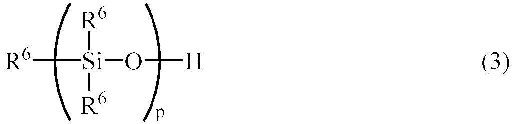

In the formula (3), R⁶ each is identical to R¹ in the formula (1), and preferably represents a methyl group, phenyl group or vinyl group.

p is a number that satisfies 1 ≤ p ≤ 1,000, more preferably satisfies 1 ≤ p ≤ 800, and even more preferably satisfies 1 ≤ p ≤ 700. Within these ranges, the composition will not be too viscous, and will be easy to handle.

Amount of addition of the compound (C-1), when used as the component (C), is preferably 0.01 to 200 parts by weight per 100 parts by weight of the component (A), which is more preferably 0.05 to 100 parts by weight, and even more preferably 0.1 to 20 parts by weight. Within these ranges, the obtainable cured product will have further improved hardness.

### (C-2) Organosilicon compound having the formula (4) below

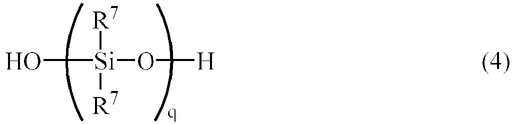

In the formula (4), R⁷ each is identical to R¹ in formula (1), and preferably represents a methyl group, phenyl group or vinyl group.

q is a number that satisfies 1 ≤ q ≤ 1,000, more preferably satisfies 1 ≤ q ≤ 800, and even more preferably satisfies 1 ≤ q ≤ 700. Within these ranges, the composition will not be too viscous, and will be easy to handle.

Amount of addition of the compound (C-2), when used as the component (C), is preferably 0.01 to 200 parts by weight per 100 parts by weight of the component (A), which is more preferably 0.05 to 100 parts by weight, and even more preferably 0.1 to 20 parts by weight. Within these ranges, the obtainable cured product will have further improved hardness.

### (C-3) Silicone resin that contains either SiO_{4/2} unit or R⁸SiO_{3/2} unit (R⁸ is identical to R¹) as constitutive unit, and has at least one Si-OH group in molecule

The silicone resin (C-3) contains at least one of the SiO_{4/2} unit or R⁸SiO_{3/2} unit as the constitutive unit, and may further contain an R⁸₂SiO_{2/2} unit such as methylvinylsiloxy unit or dimethylsiloxy unit, or an R⁸₃SiO_{1/2} unit such as dimethylvinylsiloxy unit or trimethylsiloxy unit, and still further contains per molecule at least one Si-OH group irrelevant to condensation.

Total content of the SiO_{4/2} unit and the R⁵SiO_{3/2} unit, relative to the total siloxane unit in the silicone resin (C-3), is preferably 5 mol% or more, more preferably 10 to 95 mol%, and even more preferably 20 to 60 mol%.

The silicone resin (C-3) preferably has a weight average molecular weight within the range from 500 to 100,000, in consideration of isolation and purification. The weight average molecular weight is a polystyrene-equivalent value measured by gel permeation chromatography (using THF as eluent).

Such silicone resin may be produced by any of known methods, typically by combining alkoxysilane compounds as the individual unit sources so as to achieve a desired unit ratio in the product, and by allowing (co-)hydrolytic condensation to proceed in the presence of an acid.

Amount of addition of the silicone resin (C-3) when used as the component (C) is preferably 1 to 1,000 parts by weight per 100 parts by weight of component (A), more preferably 5 to 500 parts by weight, and even more preferably 10 to 200 parts by weight. Within these ranges, the composition will be easy to handle, and the cured product will have high hardness.

### (C-4) Silica having surface Si-OH group

Silica (C-4) may be used those having Si-OH group on the surface, which are exemplified by fumed silica, crystalline silica (quartz powder), precipitated silica, and partially hydrophobized silica.

Among such sorts of silica, hydrophilic silica includes fumed silicas such as Aerosil 130, 200, 300 (from Nippon Aerosil Co., Ltd., or from Degussa AG), Cabosil MS-5, MS-7 (from Cabot Corporation), and Rheorosil QS-102, 103 (from Tokuyama Corporation); and precipitated silica such as Tokusil US-F (from Tokuyama Corporation), and Nipsil LP (from Nippon Silica Industries, Ltd.).

Hydrophobic silica is exemplified by fumed silicas such as Aerosil R-812, R-812S, R-972, R-974 (from Degussa AG), and Rheorosil MT-10 (from Tokuyama Corporation); and precipitated silica such as Nipsil SS Series (from Nippon Silica Industries, Ltd.).

The crystalline silica is exemplified by Crystalite, Min-U-Sil, and Imsil.

These silicas may be used singly, or two or more may be used in combination.

While these silicas may be used as they are, it is preferable to use them preliminarily surface-treated with a silylation agent, or to use them surface-treated by adding a silylation agent when kneaded with a silicone oil.

The silylation agent may be used any of known ones including alkylalkoxysilane, alkylchlorosilane, alkylsilazane, silane coupling agent, titanate-base treatment agent and fatty acid ester. The silylation agent may be used singly, or two or more may be used at the same time or stepwise for surface treatment.

The silicas preferably have a specific surface area, measured by the BET method, of 50 to 400 m²/g, and particularly 100 to 350 m²/g. Within these ranges, the composition will be easy to handle, and the cured product will have high hardness.

Amount of addition of the compound (C-4), when used as the component (C), is preferably 5 to 300 parts by weight per 100 parts by weight of the component (A), which is more preferably 10 to 200 parts by weight. Within these ranges, the composition will be easy to handle, and the cured product will have high hardness.

### [4] Component (D)

To the oxygen-curable silicone composition of the present invention, a (meth)acrylate compound free of siloxane structure may be added as the component (D), for the purpose of improving hardness of the obtainable cured product.

Examples of monofunctional (meth)acrylate compound free of siloxane structure include isoamyl acrylate, lauryl acrylate, stearyl acrylate, ethoxy-diethylene glycol acrylate, methoxy-triethylene glycol acrylate, 2-ethylhexyl-diglycol acrylate, phenoxyethyl acrylate, phenoxydiethylene glycol acrylate, tetrahydrofurfuryl acrylate, and isobornyl acrylate. These compounds may be used singly, or two or more may be used in combination. Among them, preferable is isobornyl acrylate.

Examples of multifunctional (meth)acrylate compound free of siloxane structure include triethylene glycol diacrylate, polytetramethylene glycol diacrylate, neopentyl glycol diacrylate, 1,6-hexanediol diacrylate, dimethylol-tricyclodecane diacrylate, trimethylolpropane triacrylate, and pentaerythritol tetraacrylate. These compounds may be used singly, or two or more may be used in combination. Among them, preferable is dimethylol-tricyclodecane diacrylate.

Amount of addition of these (meth)acrylate compounds, when used as the component (D), is preferably 1 to 1,000 parts by weight in total of the component (D), per 100 parts by weight of the component (A), and is more preferably 1 to 100 parts by weight. Within these ranges, the obtainable cured product will have further improved hardness.

### [5] Other components

Besides the aforementioned essential components (A) to (C) and the optional component (D), still other additives may be added as necessary to the oxygen-curable silicone composition of the present invention, which are exemplified by fillers for reinforcement, viscosity control, improved heat resistance and improved flame retardancy, such as titanium oxide, iron oxide, aluminum oxide, calcium carbonate and magnesium carbonate; silane coupling agent; polymerization inhibitor; antioxidant; and light stabilizer. The composition of the present invention may be used after being appropriately mixed with other resin composition.

The oxygen-curable silicone composition of the present invention can be produced by mixing and kneading the components (A) to (C), the optional component (D), and the other components in the absence of oxygen. Note that any freely selectable component may be divided into two packs, and may be mixed immediately before use.

The oxygen-curable silicone composition of the present invention rapidly cures, upon exposure to an oxygen-containing environment. The oxygen-containing environment is not specifically limited so long as oxygen resides therein, and is preferably the atmospheric environment.

In a typical case where the oxygen-curable silicone composition of the present invention is formed into a sheet of approximately 2.0 mm thick, reaction time is preferably 30 minutes or longer, and more preferably one hour or longer.

The cured product obtainable from the oxygen-curable silicone composition of the present invention preferably has a hardness of 1 or larger and smaller than 90 (Type A), and more preferably has a hardness of 10 or larger and smaller than 85 (Type A). Note that these values are measured in compliance with JIS K 6249.

### EXAMPLES

Hereinafter, the present invention is further described in detail referring to Examples and Comparative Examples. The present invention is, however, not limited to these Examples.

Note that, viscosity of the composition described in Examples below was measured using a rotational viscometer. Content of Si-OH was calculated by ²⁹Si-NMR spectrometry. [1] Production of Silicone Composition and Cured Product of Same

### Examples 1 to 7, Comparative Examples 1, 2

The components (A) to (D) below were mixed according to ratios of mixing (parts by weight) listed in Table 1, to prepare the silicone compositions.

### Component (A)

(A-1): Organopolysiloxane represented by formula below 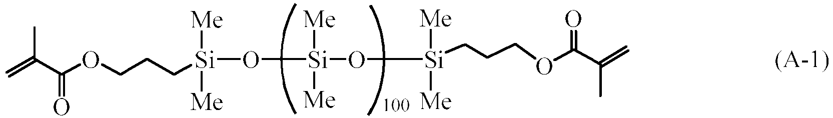
(A-2): Organopolysiloxane represented by formula below 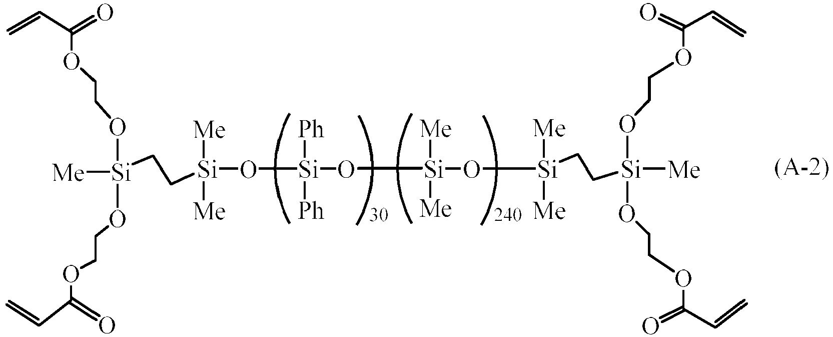 (In formula, order of arrangement of siloxane units in parentheses is freely selectable.)

### Component (B)

### (B-1): Methoxydiethylborane (MDEB)-THF complex (50% solution in THF, from BASF)

### Component (C)

(C-1): Hydroxytrimethylsilane (Si-OH content = 0.901 mol/100 g)
(C-2): Organopolysiloxane represented by formula below
   (Si-OH content = 0.012 mol/100 g): 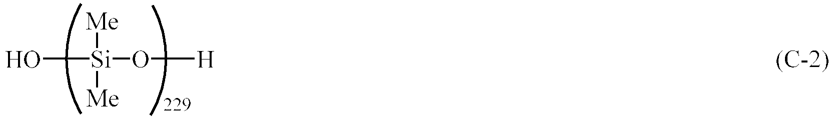
(C-3): Branched organopolysiloxane
   (ratio of constitutive units Me₃SiO_{1/2} : Me₂ViSiO_{1/2} : SiO_{4/2} = 7.4 : 1.3 : 10, Si-OH content = 0.016 mol/100 g, Si-Vi content = 0.085 mol/100 g, weight average molecular weight = 5,300)
(C-4): Fumed silica
   (specific surface area = 140 m²/g, Si-OH content = 0.0233 mol/100 g, with trimethylsilylated surface)

### Component (D)

### (D-1): Isobornyl acrylate (Light Acrylate IB-XA, from Kyoeisha Chemical Co., Ltd.)

**Table 1**

| | | Example | | | | | | | Comparative Example | |
|---|---|---|---|---|---|---|---|---|---|---|
| | | 1 | 2 | 3 | 4 | 5 | 6 | 7 | 1 | 2 |
| Component (A) | (A-1) | 100 | - | 100 | 100 | 100 | - | 100 | 100 | - |
| | (A-2) | - | 100 | - | - | - | 100 | - | - | 100 |
| Component (B) | (B-1) | 1.0 | 1.0 | 1.0 | 0.2 | 1.0 | 1.0 | 1.0 | 1.0 | 1.0 |
| Component (C) | (C-1) | 1.0 | 1.0 | - | - | - | - | 1.0 | - | - |
| | (C-2) | - | - | 25 | - | - | - | - | - | - |
| | (C-3) | - | - | - | 100 | - | - | - | - | - |
| | (C-4) | - | - | - | - | 15 | 15 | - | - | - |
| Component (D) | (D-1) | - | - | - | - | - | - | 25 | - | - |

For each of the silicone compositions obtained in Examples and Comparative Examples above, viscosity change in the atmosphere at 25°C was monitored using a rotational viscometer, and the curing time was determined on the basis of a point in time when the viscosity exceeded 200 Pa·s. Results are summarized in Table 2.

Each of the silicone compositions produced in the Examples and Comparative Examples was poured into a mold, a Teflon (registered trademark) sheet was placed thereon, and then allowed to stand in the atmosphere at 25°C for one hour, to obtain a cured sheet of 2.0 mm thick. Hardness of the thus obtained cured sheet was measured using a type A durometer in compliance with JIS K 6249. Results are summarized collectively in Table 2.

**Table 2**

| | Example | | | | | | | Comparative Example | |
|---|---|---|---|---|---|---|---|---|---|
| | 1 | 2 | 3 | 4 | 5 | 6 | 7 | 1 | 2 |
| Curing time (min) | 19 | 6 | 38 | 12 | 8 | 6 | 15 | Not cured | Not cured |
| Hardness (Type A) | 38 | 17 | 30 | 14 | 50 | 21 | 42 | Not cured | Not cured |

As summarized in Table 2, the oxygen-curable silicone compositions of the present invention prepared in Examples 1 to 7 were found to cure at 25°C, meanwhile the silicone compositions with less contents of Si-OH prepared in Comparative Examples 1 and 2 were found to remain uncured at 25°C.

Although some preferred embodiments have been described, many modifications and variations may be made thereto in light of the above teachings. It is therefore to be understood that the invention may be practiced otherwise than as specifically described without departing from the scope of the appended claims.

## Claims

1. An oxygen-curable silicone composition comprising:
(A) 100 parts by weight of an organopolysiloxane having the formula (1) below: 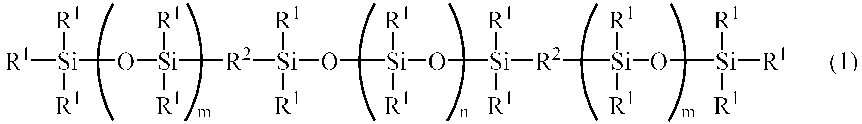 wherein R¹ each independently represents an alkyl group having 1 to 10 carbon atoms, alkenyl group having 2 to 10 carbon atoms, aryl group having 6 to 10 carbon atoms, acryloyloxy group, methacryloyloxy group, acryloyloxyalkyl group, methacryloyloxyalkyl group, acryloyloxyalkyloxy group, or methacryloyloxyalkyloxy group, and has per molecule at least one group selected from acryloyloxy group, methacryloyloxy group, acryloyloxyalkyl group, methacryloyloxyalkyl group, acryloyloxyalkyloxy group, and methacryloyloxyalkyloxy group; R² each independently represents an oxygen atom, alkylene group having 1 to 10 carbon atoms, or arylene group having 6 to 10 carbon atoms; and m and n represent numbers that satisfy 1 ≤ m + n ≤ 1,000;
(B) 0.01 to 20 parts by weight of an organoborane complex having the formula (2) below: 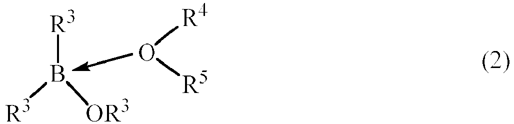 wherein R³ each independently represents a monovalent hydrocarbon group having 1 to 10 carbon atoms, R⁴ and R⁵ each independently represents a hydrocarbon group having 1 to 10 carbon atoms, and, R⁴ and R⁵ may bond to form a divalent linking group; and
(C) 0.01 to 1,000 parts by weight of a compound having Si-OH group.

2. The oxygen-curable silicone composition of claim 1, wherein the compound having Si-OH group of component (C) is one or more compounds selected from:
(C-1) an organosilicon compound having the formula (3) below: 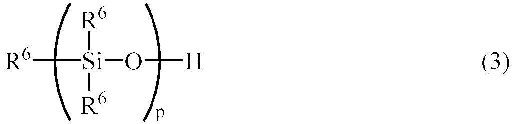 wherein R⁶ each is identical to R¹, and p is a number that satisfies 1 ≤ p ≤ 1,000;
(C-2) an organosilicon compound having the formula (4) below: 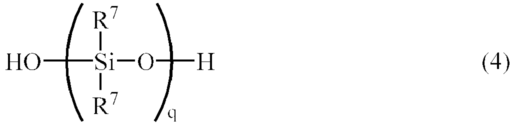 wherein R⁷ each is identical to R¹, and q represents a number that satisfies 1 ≤ q ≤ 1,000;
(C-3) a silicone resin that contains either SiO_{4/2} unit or R⁸SiO_{3/2} unit (R⁸ is identical to R¹) as a constitutive unit, and has at least one Si-OH group in a molecule; and
(C-4) a silica having a Si-OH group on a surface.

3. The oxygen-curable silicone composition of claim 1 or 2, wherein the compound having Si-OH group of component (C) contains, per 100 g, 0.001 mol or more of Si-OH group.

4. The oxygen-curable silicone composition of any one of claims 1 to 3, further comprising:
(D) 1 to 1,000 parts by weight of at least one compound selected from acrylate compound free of siloxane structure and methacrylate compound free of siloxane structure, per 100 parts by weight of the component (A).

5. A cured product of the oxygen-curable silicone composition of any one of claims 1 to 4.

## Patentansprüche

1. Sauerstoffhärtbare Silikonzusammensetzung, umfassend:
(A) 100 Gewichtsteile eines Organopolysiloxans mit der nachfolgenden Formel (1): 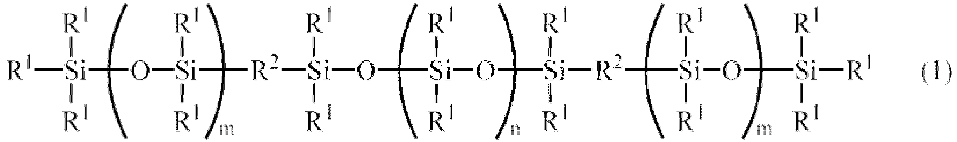 worin R¹ jeweils unabhängig eine Alkylgruppe mit 1 bis 10 Kohlenstoffatomen, Alkenylgruppe mit 2 bis 10 Kohlenstoffatomen, Arylgruppe mit 6 bis 10 Kohlenstoffatomen, Acryloyloxygruppe, Methacryloyloxygruppe, Acryloyloxyalkylgruppe, Methacryloyloxyalkylgruppe, Acryloyloxyalkyloxygruppe oder Methacryloyloxyalkyloxygruppe bedeutet und pro Molekül mindestens eine Gruppe aufweist, gewählt aus Acryloyloxygruppe, Methyacryloyloxygruppe, Acryloyloxyalkylgruppe, Methacryloyloxyalkylgruppe, Acryloyloxyalkyloxygruppe und Methacryloyloxyalkyloxygruppe; R² jeweils unabhängig ein Sauerstoffatom, Alkylengruppe mit 1 bis 10 Kohlenstoffatomen oder Arylengruppe mit 6 bis 10 Kohlenstoffatomen bedeutet; und m und n Zahlen bedeuten, welche 1 ≤ m + n ≤ 1.000 genügen;
(B) 0,01 bis 20 Gewichtsteile eines Organoborankomplexes mit der nachfolgenden Formel (2): 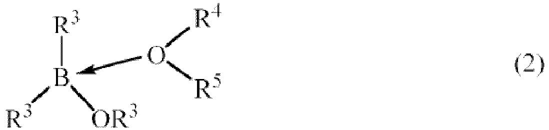 worin R³ jeweils unabhängig eine einwertige Kohlenwasserstoffgruppe mit 1 bis 10 Kohlenstoffatomen bedeutet, R⁴ und R⁵ jeweils unabhängig eine Kohlenwasserstoffgruppe mit 1 bis 10 Kohlenstoffatomen bedeutet, und R⁴ und R⁵ sich verbinden können zur Bildung einer zweiwertigen Verbindungsgruppe; und
(C) 0,01 bis 1.000 Gewichtsteile einer Verbindung mit einer Si-OH-Gruppe.

2. Sauerstoffhärtbare Silikonzusammensetzung nach Anspruch 1, wobei die Verbindung mit Si-OH-Gruppe der Komponente (C) eine oder mehrere Verbindungen sind, gewählt aus:
(C-1) einer Organosiliciumverbindung mit der nachfoldenden Formel (3): 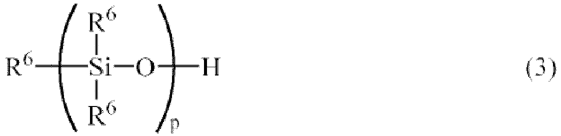 worin R⁶ jeweils identisch zu R¹ ist, und p eine Zahl ist, welche 1 ≤ p ≤ 1.000 genügt;
(C-2) eine Organosiliciumverbindung mit der nachfolgenden Formel (4): 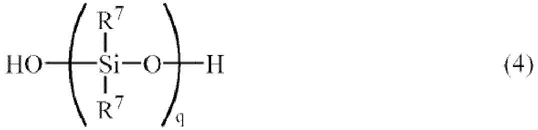 worin R⁷ jeweils identisch zu R¹ ist, und q eine Zahl ist, welche 1 ≤ q ≤ 1.000 genügt;
(C-3) ein Silikonharz, das entweder Si-O_{4/2}-Einheit oder R⁸SiO_{3/2}-Einheit enthält (R⁸ ist identisch zu R¹) als eine Aufbaueinheit, und mindestens eine Si-OH-Gruppe in einem Molekül aufweist; und
(C-4) ein Silica mit einer Si-OH-Gruppe auf einer Oberfläche.

3. Sauerstoffhärtbare Silikonzusammensetzung nach Anspruch 1 oder 2, wobei die Verbindung mit Si-OH-Gruppe der Komponente (C) pro 100 g, 0,001 Mol oder mehr Si-OH-Gruppe enthält.

4. Sauerstoffhärtbare Silikonzusammensetzung nach irgendeinem der Ansprüche 1 bis 3, weiterhin umfassend:
(D) 1 bis 1.000 Gewichtsteile mindestens einer Verbindung, gewählt aus einer Acrylatverbindung, die frei an Siloxanstruktur ist, und Methacrylatverbindung, die frei an Siloxanstruktur ist, pro 100 Gewichtsteilen der Komponente (A).

5. Gehärtetes Produkt aus der sauerstoffhärtbaren Silikonzusammensetzung nach irgendeinem der Ansprüche 1 bis 4.

## Revendications

1. Composition de silicone durcissable à l'oxygène comprenant :
(A) 100 parties en poids d'un organopolysiloxane répondant à la formule (1) ci-dessous : 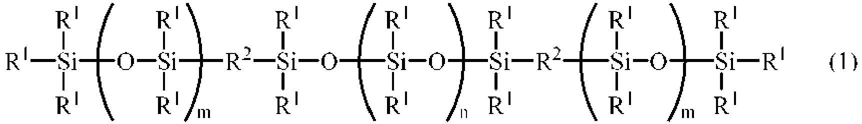 dans laquelle R¹ représente chacun indépendamment un groupe alkyle ayant 1 à 10 atomes de carbone, un groupe alcényle ayant 2 à 10 atomes de carbone, un groupe aryle ayant 6 à 10 atomes de carbone, un groupe acryloyloxy, un groupe méthacryloyloxy, un groupe acryloyloxyalkyle, un groupe méthacryloyloxyalkyle, un groupe acryloyloxyalkyloxy, ou un groupe méthacryloyloxyalkyloxy, et possède par molécule au moins un groupe choisi parmi le groupe acryloyloxy, le groupe méthacryloyloxy, le groupe acryloyloxyalkyle, le groupe méthacryloyloxyalkyle, le groupe acryloyloxyalkyloxy et le groupe méthacryloyloxyalkyloxy ; R² représente chacun indépendamment un atome d'oxygène, un groupe alkylène ayant 1 à 10 atomes de carbone, ou un groupe arylène ayant 6 à 10 atomes de carbone ; et m et n représentent des nombres qui satisfont 1 ≤ m + n ≤ 1 000 ;
(B) 0,01 à 20 parties en poids d'un complexe organoborane répondant à la formule (2) ci-dessous : 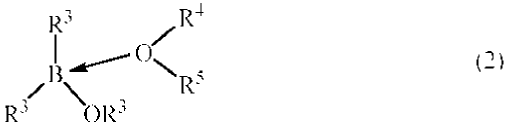 dans laquelle R³ représente chacun indépendamment un groupe hydrocarboné monovalent ayant 1 à 10 atomes de carbone, R⁴ et R⁵ représentent chacun indépendamment un groupe hydrocarboné ayant 1 à 10 atomes de carbone, et R⁴ et R⁵ peuvent se lier pour former un groupe de liaison divalent ; et
(C) 0,01 à 1 000 parties en poids d'un composé ayant un groupe Si-OH.

2. Composition de silicone durcissable à l'oxygène selon la revendication 1, dans laquelle le composé ayant un groupe Si-OH du composant (C) est un ou plusieurs composés choisis parmi :
(C-1) un composé organosilicié répondant à la formule (3) ci-dessous : 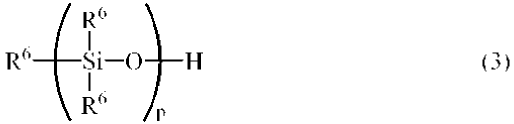 dans laquelle R⁶ est chacun identique à R¹, et p est un nombre qui satisfait 1 ≤ p ≤ 1 000 ;
(C-2) un composé organosilicié répondant à la formule (4) ci-dessous : 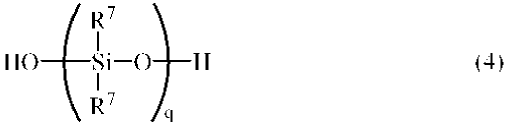 dans laquelle R⁷ est chacun identique à R¹, et q représente un nombre qui satisfait 1 ≤ q < 1 000 ;
(C-3) une résine de silicone qui contient soit un motif SiO_{4/2} soit un motif R⁸SiO_{3/2} (R⁸ est identique à R¹) en tant que motif constitutif, et a au moins un groupe Si-OH dans une molécule ; et
(C-4) une silice ayant un groupe Si-OH sur une surface.

3. Composition de silicone durcissable à l'oxygène selon la revendication 1 ou 2, dans laquelle le composé ayant un groupe Si-OH du composant (C) contient, pour 100 g, 0,001 mole ou plus de groupe Si-OH.

4. Composition de silicone durcissable à l'oxygène selon l'une quelconque des revendications 1 à 3, comprenant en outre :
(D) 1 à 1 000 parties en poids d'au moins un composé choisi parmi le composé acrylate sans structure siloxane et le composé méthacrylate sans structure siloxane, pour 100 parties en poids du composant (A).

5. Produit durci de la composition de silicone durcissable à l'oxygène selon l'une quelconque des revendications 1 à 4.
